# EUROPÄISCHE PATENTSCHRIFT

(11) **EP 3 927 595 B1**
(45) Veröffentlichungstag und Bekanntmachung des Hinweises auf die Patenterteilung: **28.12.2022**
(21) Anmeldenummer: 20700880.6
(22) Anmeldetag: 14.01.2020
(51) Int. Cl.: B62D 15/02

(54) **SYSTEM UND VERFAHREN ZUM AUTOMATISIERTEN FAHREN UND ZUM AUTOMATISIERTEN RÜCKWÄRTIGEN EINPARKEN IN EINE PARKLÜCKE AUS DEM AUTOMATISIERTEN FAHRBETRIEB HERAUS**
SYSTEM AND METHOD FOR AUTOMATED DRIVING AND FOR AUTOMATED PARKING IN REVERSE IN A PARKING SPACE FROM THE AUTOMATED DRIVING MODE
SYSTÈME ET PROCÉDÉ DE CONDUITE AUTOMATISÉE ET DE STATIONNEMENT EN MARCHE ARRIÈRE AUTOMATISÉ SUR UN EMPLACEMENT DE STATIONNEMENT SUR LA BASE DU MODE DE CONDUITE AUTOMATISÉE

(30) Priorität: 21.02.2019 DE 102019104464
(43) Veröffentlichungstag der Anmeldung: 29.12.2021
(73) Patentinhaber: Bayerische Motoren Werke Aktiengesellschaft, 80809 München (DE)
(72) Erfinder: VON EICHHORN, Andreas, 81927 München (DE); VON EICHHORN, Sabine, 81927 München (DE)
(86) Internationale Anmeldenummer: PCT/EP2020/050748
(87) Internationale Veröffentlichungsnummer: WO 2020/169269

(56) Entgegenhaltungen:
- WO-A1-2015/150864
- DE-A1-102010 041 902
- DE-A1-102015 211 732
- US-A1- 2017 329 346

## Beschreibung

Die Erfindung betrifft ein System zum automatisierten Fahren, welches dazu dient ein Kraftahrzeug, insbesondere einen Personenkraftwagen, in einem automatisierten Fahrbetrieb mit zumindest automatisierter Längsführung zu steuern. Das System dient ferner dazu, das Kraftfahrzeug aus dem automatisierten Fahrbetrieb heraus im Rahmen eines automatisierten Einparkmanövers automatisiert in eine Parklücke rückwärts einzuparken. Ferner betrifft die Erfindung ein entsprechendes Verfahren.

Unter dem Begriff "automatisiertes Fahren" wird im Rahmen des Dokuments ein auf eine gewisser Dauer angelegtes Fahren mit zumindest automatisierter Längsführung verstanden, insbesondere mit automatisierter Längs- und Querführung, welches einen beliebigen Automatisierungsgrad aufweisen kann. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer beispielhaft dauerhaft die Querführung aus, während das System die Längsführung in gewissen Grenzen übernimmt. Beispiele hierfür sind eine einfacher Tempomat oder ein Abstandstempomat (auch als ACC bekannt - Adaptive Cruise Control). Beim teilautomatisierten Fahren (TAF) übernimmt das System die Längs- und Querführung, wobei der Fahrer das System wie beim assistierten Fahren dauerhaft überwachen muss. Ein Beispiel hierfür ist ein kombiniertes System mit ACC-Funktion und Spurhalte-Funktion. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Es sind Parkassistenzsysteme zum automatisierten Einparken bekannt. Bei Parkassistenzsystemen mit automatisierter Querführung wird die Lenkung des Kraftfahrzeugs während des Parkvorgangs vom System übernommen.

Die Längsführung muss der Fahrer durch entsprechendes Beschleunigen und Bremsen selbst übernehmen. Bei Parkassistenzsystemen mit automatisierter Querführung und automatisierter Längsführung wird auch die Aufgabe der Längsführung teilweise oder vollständig vom Parkassistenzsystem übernommen. Bei Parkassistenzsystemen mit automatisierter Querführung und automatisierter Längsführung werden im Allgemeinen die Lenkung, die Bremse, der Fahrzeugantrieb und die Fahrtrichtung (Vorwärts- oder Rückwärtsfahrt) vom Parkassistenzsystem gesteuert. Bei derartigen Parkassistenzsystemen hat der Fahrer beispielsweise die Möglichkeit, per Betätigung eines Bedienelements im Fahrzeugcockpit, beispielsweise einer Taste, das Fahrzeug selbständig zu parken; es kann vorgesehen sein, dass das Bedienelement während des Parkmanövers weiterhin betätigt werden muss.

Bekannte Parkassistenzsysteme mit zumindest automatisierter Querführung umfassen normalerweise eine Einparkfunktion zum automatisierten rückwärtigen Einparken in eine parallel zur Fahrbahn liegende Längsparklücke und optional auch in eine quer oder gar schräg zur Fahrbahn liegende Parklücke. Diese vermessen vor Durchführung des Einparkmanövers mittels einer Ultraschallsensorik eine Parklücke im Vorbeifahren. Wenn das Fahrzeug vom Fahrer in einem gültigen Ausgangsposition hinter der Parklücke angehalten wird, in dem eine mögliche Trajektorie zu einer gültigen Parkendposition in der Parklücke existiert, kann das Fahrzeug ausgehend von der Ausgangsposition hinter der Parklücke rückwärts mit automatisierter Querführung und gegebenenfalls automatisierter Längsführung entlang der berechneten Einparktrajektorie in die Längsparklücke eingeparkt werden. Im Fall eines rückwärtigen Einparkens in eine Querparklücke oder Schrägparklücke erfolgt ausgehend von einer Ausgangsposition hinter der Parklücke ein erster rückwärtiger Einparkzug, bei dem die Fahrzeugfront in Richtung der Parklücke gedreht wird, und dann anschließend ein Vorwärtszug in die Parklücke.

Beim Einparken im fließenden Verkehr kann es vorkommen, dass der Folgeverkehr so dicht auffährt, dass ein automatisiertes Einparken erschwert oder gar unmöglich ist: Wenn das eigene Fahrzeug in eine Parklücke eingeparkt werden soll und das Fahrzeug nach Vermessen der Parklücke vom Fahrer hinter der Parklücke angehalten wird, kann ein rückwärtiges Folgefahrzeug den Weg in die Lücke versperren. Bei sehr dichtem Verkehr kann das rückwärtige Folgefahrzeug dann ebenfalls nicht weiter zurücksetzen, falls sich dahinter bereits weitere Fahrzeuge angesammelt haben.

Aus der Druckschrift WO 2015/150864 A1 ist ein Verfahren zum Einparken in eine Parklücke bekannt, bei dem der Fahrer manuell das Fahrzeug bereits vor der Parklücke in einer Position anhält, in der jedes andere Fahrzeug hinter dem eigenen Fahrzeug das eigene Fahrzeug nicht beim Parken in die Parklücke behindert, und dann einen Befehl zum Detektieren einer vorausliegenden Parklücke gibt. Basierend hierauf wird dann eine Trajektorie bestimmt und das Fahrzeug wird dann basierend auf der Trajektorie automatisiert in die Parklücke eingeparkt.

Aus der Druckschrift DE 10 2015 208 697 A1 ist es ferner bekannt, dass ein hinterherfahrendes Fahrzeug feststellt, dass sich ein voranfahrendes Fahrzeug in einer Einparksituation befindet, bei der das voranfahrende Fahrzeug an einer Parklücke vorbeifährt, in die das voranfahrende Fahrzeug rückwärts einparken möchte. Wenn eine derartige Einparksituation seitens des hinterherfahrenden Fahrzeugs festgestellt wird, wird das hinterherfahrende Fahrzeug vor der Parklücke auf Höhe des die Parklücke begrenzenden Fahrzeugs in den Stillstand gebracht. Ähnliches ist in der Druckschrift DE 10 2015 211 732 A1 beschrieben.

Aus der Druckschrift DE 10 2011 003 886 A1 ist es bekannt, dass ein vorausfahrendes Fahrzeug eine Information über einen beabsichtigten Parkvorgang an ein hinterherfahrendes Fahrzeug übersendet, so dass das hinterherfahrende Fahrzeug ausreichend Abstand lässt, um das vorausfahrende Fahrzeug einparken zu lassen.

Es ist Aufgabe der Erfindung, ein System zum automatisierten rückwärtigen Einparken anzugeben, welches das Behindern des Einparkmanövers durch ein Folgefahrzeug verhindert, und zwar ohne die Notwendigkeit einer geeigneten technischen Ausstattung des Folgefahrzeugs, um ausreichenden Abstand zum vorausfahrenden Fahrzeug zu lassen.

Die Aufgabe wird durch die Merkmale der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Ein erster Aspekt der Erfindung betrifft ein System zum automatisierten Fahren eines Kraftfahrzeugs in einem automatisierten Fahrbetrieb und zum automatisierten rückwärtigen Einparken in eine Parklücke aus dem automatisierten Fahrbetrieb heraus. Für den automatisierten Fahrbetrieb mit zumindest automatisierter Längsführung umfasst das System beispielsweise eine ACC-Funktion, ggf. mit zusätzlicher Spurhaltefunktion. Bei dem automatisierten Fahrbetrieb kann es sich alternativ auch um einen automatisierten Fahrbetrieb mit höherem Automatisierungsgrad gemäß SAE-Level 3 bis 5 handeln.

Das System ist eingerichtet, verschiedene nachfolgend beschriebene Tätigkeiten durchzuführen. Dies erfolgt typischerweise mittels einer elektronischen Steuereinrichtung, die ein oder mehrere Steuergeräte umfasst. Die Steuereinrichtung kann einen oder mehrere Prozessoren umfassen, die über ein oder mehrere Software-Programme gesteuert in erfindungsgemäßer Weise arbeiten.

Wie bereits vorstehend ausgeführt, ist das System eingerichtet, das Kraftahrzeug in einem automatisierten Fahrbetrieb mit zumindest automatisierter Längsführung zu steuern, beispielsweise im Rahmen einer ACC-Funktion.

In dieser Fahrsituation kann vom Fahrer oder von einem anderen Insassen beispielsweise ein Wunsch geäußert werden zu parken; dies wird vom System registriert. Beispielsweise kann vorgesehen sein, dass die Betätigung eines mit einem Einparkwunsch verknüpften Bedienelements, beispielsweise einer Parktaste, festgestellt wird. Die nachfolgend beschriebenen Verfahrensschritte betreffend das Halten des Fahrzeugs erfolgen beispielsweise unter der Voraussetzung, dass das System einen fahrerseitigen oder insassenseitigen Parkwunsch erkannt hat. Dies ist jedoch nicht zwingend: Bei einem automatisierten Fahrbetrieb gemäß SAE-Level 4 oder 5 wäre es auch denkbar, dass das Fahrzeug selbstständig bei Erreichen eines Fahrziels die Notwendigkeit zum Parken erkennt und ein Einparken des Fahrzeugs auslöst, ohne dass eine Person im Fahrzeug dem System einen Parkwunsch mitteilt.

Während des automatisierten Fahrbetriebs mit zumindest automatisierter Längsführung wird eine vorzugsweise vorausliegende Parklücke seitens des Systems erkannt. Bei der Parklücke handelt es sich beispielsweise um eine Längsparklücke. Optional ist das System eingerichtet, eine Querparklücke oder gar eine Diagonalparklücke zu erkennen. Zu Erkennung einer vorausliegenden Parklücke wird vorzugsweise eine ausreichend weit vorausschauende Umfeldsensorik verwendet, beispielsweise ein laserbasiertes Lidar (light detection and ranging), eine Kamera und/oder ein Radar. Alternativ oder zusätzlich können zur Erkennung einer vorausliegenden freien Parklücke auch mittels C2X von anderen Verkehrsteilnehmern oder von einer Infrastruktur empfangene Information über die Position der Parklücke verwendet werden und mit der Fahrzeugposition verglichen werden. Es wäre aber auch denkbar, eine gewöhnliche zur Seite gerichtete Ultraschallsensorik zu verwenden, die die Parklücke erst erkennt, wenn das Kraftfahrzeug ungefähr auf der Höhe der Parklücke ist; in diesem Fall kann das Fahrzeug im Vergleich zu einer vorausschauenden Umfeldsensorik aber erst später das Fahrzeug zum Stillstand bringen (beispielsweise erst auf Höhe der Parklücke und nicht bereits vor der Parklücke).

Ferner wird seitens des Systems geprüft, ob ein Folgefahrzeug hinter dem Fahrzeug vorhanden ist. Hierzu wird vorzugsweise eine nach hinten blickende Umfeldsensorik verwendet, beispielsweise eine Radarsensorik, eine Kamera oder eine am Heck befindliche Ultraschallsensorik für ein Einparkassistenzsystem. Es ist von Vorteil, wenn die Umfeldsensorik eine höhere Reichweite (beispielsweise eine Reichweite von 20 m) als eine gewöhnliche heckseitige Ultraschallsensorik eines Einparksystems (beispielsweise mit einer Reichweite von 5 m oder weniger) hat, damit auch weiter hinter dem Fahrzeug fahrende Fahrzeuge erkannt werden können.

Falls festgestellt wird, dass ein Folgefahrzeug vorhanden ist, kann das System in einer ersten Handlungsalternative das Kraftfahrzeug in den Stillstand mit einer derartigen Stillstandsposition bringen, in der sich das Kraftfahrzeug noch nicht hinter der Parklücke befindet, beispielsweise in eine Stillstandsposition noch vor der Parklücke oder auf Höhe der Parklücke. Das Fahrzeug bremst also in den Stillstand, bevor es die Parklücke passiert hat.

Es wird darauf hingewiesen, dass die erste Handlungsalternative nicht zwingend bereits bei Vorliegen eines Folgefahrzeugs durchgeführt wird, sondern von einem oder mehreren weiteren Bedingungen abhängig sein kann. Beispielsweise wird während des Annäherns an die Parklücke der räumliche oder zeitliche Abstand zwischen dem eigenen Fahrzeug und dem Folgefahrzeug bestimmt, und geprüft, ob ein bestimmtes Abstandskriterium erfüllt wird. Erst wenn das Abstandskriterium erfüllt ist, wird die erste Handlungsalternative durchgeführt und das Kraftfahrzeug in den Stillstand mit der derartigen Stillstandsposition gebracht, in der sich das Kraftfahrzeug noch nicht hinter der Parklücke befindet. Beispielsweise wird als Abstandskriterium geprüft, ob der zeitliche oder räumliche Abstand zum Folgefahrzeug kleiner oder kleiner gleich als ein bestimmter oberer Schwellwert ist (z. B. ein zeitlicher Schwellwert im Bereich von 1 bis 2 s). Ferner wäre es denkbar, dass der zeitliche oder räumliche Abstand zum Folgefahrzeug zusätzlich auch größer oder größer gleich als ein bestimmter unterer Schwellwert sein muss, damit überhaupt das Fahrzeug in den Stillstand gebremst wird.

Dadurch, dass das Fahrzeug in einer Stillstandsposition gebracht wird, in der sich das Kraftfahrzeug noch nicht hinter der Parklücke befindet, wird das Folgefahrzeug im Allgemeinen noch vor der Parklücke zum Anhalten gebracht, so dass dieses anschließend nicht den Weg in die Parklücke zum Einparken versperren kann.

Im Rahmen der ersten Handlungsalternative wird nach der Erreichen der Stillstandsposition, in der sich das Kraftfahrzeug noch nicht hinter der Parklücke befindet, das Kraftfahrzeug an der Parklücke automatisiert vorbeigefahren und dann das Kraftfahrzeug in den Stillstand mit einer Stillstandsposition gebracht, in der sich das Kraftfahrzeug hinter der Parklücke befindet, um dann das Kraftfahrzeug rückwärts in die Parklücke automatisiert einzuparken.

Falls hingegen überhaupt kein Folgefahrzeug erkannt wird oder falls ggf. der Abstand zu einem Folgefahrzeug zu groß ist, führt das System eine zweite Handlungsalternative durch, bei der das Kraftfahrzeug ohne vorheriges Anhalten automatisiert an der Parklücke vorbeifährt, dann in den Stillstand mit einer Stillstandsposition gebracht wird, in der sich das Kraftfahrzeug hinter der Parklücke befindet, um dann das Kraftfahrzeug aus dieser Position heraus rückwärts in einem oder mehreren Zügen in die Parklücke automatisiert einzuparken.

Durch das situationsbezogene bereits frühzeitige Anhalten des Kraftfahrzeugs vor der Parklücke oder auf der Höhe der Parklücke im Fall eines Folgefahrzeugs kann ein Versperren des Einparkweges durch das Folgefahrzeug verhindert werden, da dieses vor der Parklücke anhält und dann nicht den Weg in die Parklücke versperrt. Hierdurch wird ein automatisiertes Einparken auch in dichtem Folge-Verkehr ermöglicht.

Es ist von Vorteil, wenn im Rahmen der ersten Handlungsalternative mit vorhandenem Folgefahrzeug vor dem Wiederanfahren geprüft wird, ob das Folgefahrzeug in den Stillstand gekommen ist. In Reaktion auf die Feststellung, dass das Fahrzeug in den Stillstand gekommen ist, wird dann das eigene Kraftfahrzeug wieder angefahren und an der Parklücke vorbeigeführt, um dann hinter der Parklücke zum Stillstand zu kommen. Zur Prüfung des Stillstands des Folgefahrzeugs kann beispielsweise nach Stillstands des eigenen Fahrzeugs der Abstand zum Folgefahrzeug zu verschiedenen Zeitpunkten gemessen werden und festgestellt werden, dass dieser konstant bleibt.

Bei einer beispielhaften Ausführungsform der Erfindung wird für den Fall, dass der Fahrer bei einer Fahrt mit aktivierter ACC-Funktion den Wunsch äußert zu parken, eine Parklücke vor dem Fahrzeug erkannt wurde und ein Folgefahrzeug vorhanden ist, das eigene Kraftfahrzeug in den Stillstand gebremst, bevor es die Parklücke passiert hat. Gleichzeitig oder bereits früher wird der Blinker gesetzt. Nach Bremsen, insbesondere nach Erreichen des Stillstands wird geprüft, ob auch bereits das Folgefahrzeug steht. Sobald auch das Folgefahrzeug den Stillstand erreicht hat, wird das eigene Fahrzeug wieder anfahren und passiert dann die Parklücke. In der Regel wird das Folgefahrzeug dann nicht anfahren, so dass der Weg in die Parklücke nicht versperrt ist und das eigene Fahrzeug einparken kann.

Ein zweiter Aspekt der Erfindung betrifft ein Verfahren zum automatisierten Fahren eines Kraftfahrzeugs in einem automatisierten Fahrbetrieb und zum automatisierten rückwärtigen Einparken in eine Parklücke aus dem automatisierten Fahrbetrieb heraus. Das Verfahren weist die folgenden Schritte auf:
- Steuern des Kraftahrzeugs in einem automatisierten Fahrbetrieb mit zumindest automatisierter Längsführung;
- während des automatisierten Fahrbetriebs,
   - Erkennen einer Parklücke, und
   - Prüfen, ob ein Folgefahrzeug hinter dem Kraftfahrzeug vorhanden ist;
- falls ein Folgefahrzeug vorhanden ist,
   - Bringen des Kraftfahrzeugs in den Stillstand mit einer derartigen Stillstandsposition, in der sich das Kraftfahrzeug noch nicht hinter der Parklücke befindet,
   - danach automatisiertes Vorbeifahren des Kraftfahrzeugs an der Parklücke, Bringen des Kraftfahrzeugs in den Stillstand mit einer Stillstandsposition, in der sich das Kraftfahrzeug hinter der Parklücke befindet, und dann automatisiertes Einparken des Kraftfahrzeugs rückwärts in die Parklücke;
- falls kein Folgefahrzeug vorhanden ist, automatisiertes Vorbeifahren des Kraftfahrzeugs an der Parklücke, Bringen des Kraftfahrzeugs in den Stillstand mit einer Stillstandsposition, in der sich das Kraftfahrzeug hinter der Parklücke befindet, und dann automatisiertes Einparken des Kraftfahrzeugs rückwärts in die Parklücke.

Die vorstehenden Ausführungen zum erfindungsgemäßen System nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Systems.

Die Erfindung wird nachfolgend anhand eines Ausführungsbeispiels unter Zuhilfenahme der beigefügten Zeichnungen beschrieben. In diesen zeigen:
- Fig. 1: ein Ausführungsbeispiel für ein Ablaufdiagramm eines erfindungsgemäßen Systems; und
- Fig. 2a, 2b: ein beispielhaftes Einparken in der Draufsicht;

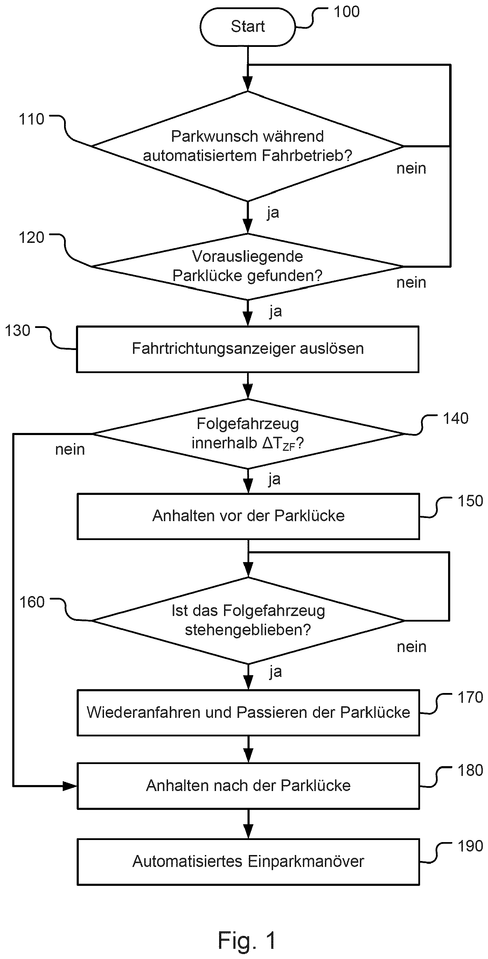

In Fig. 1 ist Ausführungsbeispiel für ein Ablaufdiagramm eines erfindungsgemäßen Systems dargestellt. Das Ablaufdiagramm geht davon aus, dass sich das eigene Kraftfahrzeug 1 in einem automatisierten Fahrbetrieb mit zumindest automatisierter Längsführung befindet. Beispielsweise befindet sich das Fahrzeug in einem Fahrbetrieb mit aktivierter ACC-Funktion, wobei die Fahrgeschwindigkeit in einer Freifahrt ohne vorausfahrendes Fahrzeug auf einen vorgegebenen Geschwindigkeitswert geregelt wird und in einer Folgefahrt der Abstand zu einem vorausfahrenden Fahrzeug geregelt wird. Das Fahrzeug fährt beispielsweise mit zumindest automatisierter Längsführung entlang einer innerstädtischen Straße mit im Fall von Rechtsverkehr auf der rechten Straßenseite parkenden Fahrzeugen.

In der Abfrage 110 wird geprüft, ob während des automatisierten Fahrbetriebs ein Parkwunsch seitens des Fahrers vorliegt. Es wird beispielsweise auf einen Parkwunsch seitens des Fahrers geschlossen, wenn vorher eine im Fahrzeugcockpit integrierte Parktaste seitens Fahrers betätigt wurde oder auf dem Bildschirm des Infotainmentsystems ein Parkmenü aktiviert wurde.

Für den Fall, dass bei aktivem Parkwunsch eine vorausliegende Parklücke über eine Umfeldsensorik (z. B. eine Kamera oder ein Lidar oder eine Kombination mehrerer verschiedener Sensortypen) mit einer gewissen Vorausschau eine vorausliegende Parklücke 2 gefunden wird (s. die Abfrage 120), wird in Schritt 130 ein Fahrtrichtungsanzeiger (auch als Blinker bezeichnet) des eigenen Fahrzeugs 1 gemäß der Straßenseite der gefundenen Parklücke 2 ausgelöst.

In der Abfrage 140 wird geprüft, ob sich ein Folgefahrzeug 3 in einem vorgegebenen Zeitfenster ΔT_{ZF} hinter dem eigenen Fahrzeug 1 befindet. Die vorgegebene Zeitlücke ΔT_{ZF} liegt beispielsweise im Bereich von 1 bis 2 s, beispielsweise ΔT_{ZF} = 1,5 s.

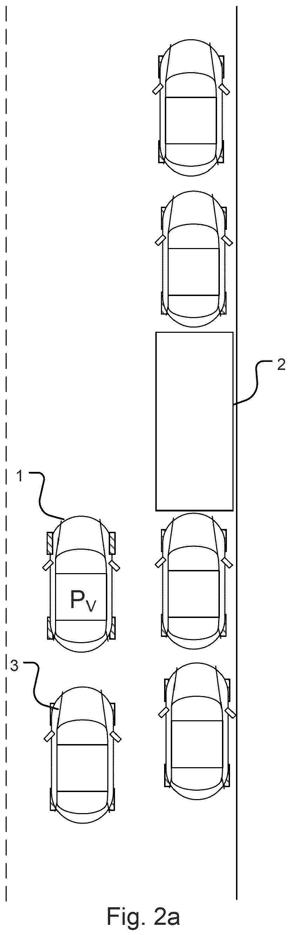

Wenn ein Folgefahrzeug 3 in dem Zeitfenster ΔT_{ZF} hinter dem eigenen Fahrzeug 1 vorhanden ist, wird das eigene Fahrzeug 1 über das System automatisiert vor der Parklücke 2 zum Stillstand mit einer Stillstandsposition Pv gebracht (s. Schritt 150). Die Situation bei stehendem Fahrzeug 1 vor der Parklücke 2 ist in Fig. 2a dargestellt, wobei das eigene Fahrzeug ungefähr auf Höhe des die Parklücke begrenzenden Kraftfahrzeugs angehalten hat. Wenn das eigene Fahrzeug 1 anhält, wird auch das Folgefahrzeug 3 anhalten.

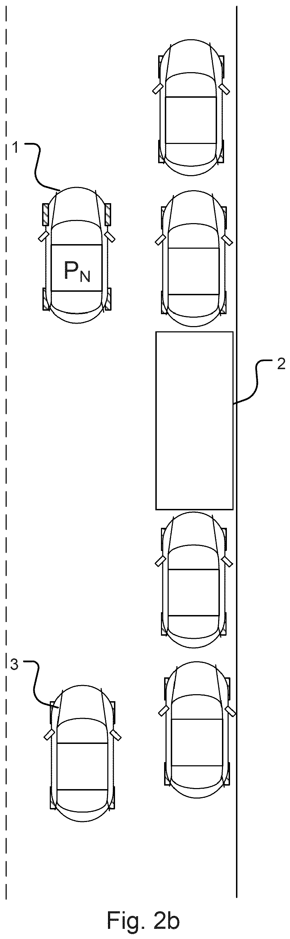

Sofern in der Abfrage 160 festgestellt wurde, dass das Folgefahrzeug stehengeblieben ist, fährt das eigene Fahrzeug wieder an, passiert automatisiert die Parklücke (s. Schritt 170) und wird dann in einer Stillstandsposition P_{N} hinter der Parklücke zum Stillstand gebracht (s. Schritt 180). Diese Situation ist in Fig. 2b dargestellt. In der Regel wird das Folgefahrzeug 3 dann nicht sofort anfahren, so dass der Weg in der Parklücke 3 nicht versperrt wird und das eigene Fahrzeug 3 automatisiert rückwärts in die Parklücke 2 einparken kann (s. Schritt 190).

Sofern in der Abfrage 140 festgestellt wurde, dass sich kein Folgefahrzeug innerhalb des Zeitfensters ΔT_{ZF} hinter dem eigenen Fahrzeug 1 befindet, passiert das Kraftfahrzeug 1 die Parklücke ohne vorher anzuhalten und hält dann automatisiert hinter der Parklücke 2 an. Im Anschluss daran erfolgt dann das rückwärtige automatisierte Einparkmanöver in die Parklücke 2.

Bei dem vorstehenden Beispiel wurde nicht die Möglichkeit berücksichtigt, dass das Folgefahrzeug 3 nach dem Stehenbleiben des eigenen Fahrzeugs 1 das eigene Fahrzeug 1 überholt. Dies könnte berücksichtigt werden, indem in der Abfrage 160 als Alternative geprüft wird, ob das Folgefahrzeug 3 das eigene Fahrzeug 1 überholt hat.

## Patentansprüche

1. System zum automatisierten Fahren eines Kraftfahrzeugs (1) in einem automatisierten Fahrbetrieb und zum automatisierten rückwärtigen Einparken in eine Parklücke (3) aus dem automatisierten Fahrbetrieb heraus, wobei das System eingerichtet ist,
- das Kraftahrzeug (1) in einem automatisierten Fahrbetrieb mit zumindest automatisierter Längsführung zu steuern,
- während des automatisierten Fahrbetriebs,
• eine Parklücke (2) zu erkennen, und
• zu prüfen, ob ein Folgefahrzeug (3) hinter dem Kraftfahrzeug vorhanden ist,
- falls ein Folgefahrzeug (3) vorhanden ist,
• das Kraftfahrzeug (1) in den Stillstand mit einer derartigen Stillstandsposition (Pv) zu bringen, in der sich das Kraftfahrzeug (1) noch nicht hinter der Parklücke (2) befindet,
• danach das Kraftfahrzeug an der Parklücke (2) automatisiert vorbeizufahren, das Kraftfahrzeug in den Stillstand mit einer Stillstandsposition (P_{N}) zu bringen, in der sich das Kraftfahrzeug hinter der Parklücke (2) befindet, und dann das Kraftfahrzeug rückwärts in die Parklücke (2) automatisiert einzuparken,
- falls kein Folgefahrzeug (3) vorhanden ist, das Kraftfahrzeug an der Parklücke (2) automatisiert vorbeizufahren, das Kraftfahrzeug in den Stillstand mit einer Stillstandsposition (P_{N}) zu bringen, in der sich das Kraftfahrzeug hinter der Parklücke (2) befindet, und dann das Kraftfahrzeug rückwärts in die Parklücke (2) automatisiert einzuparken.

2. System nach Anspruch 1, wobei das System eingerichtet ist, falls ein Folgefahrzeug (3) vorhanden ist, das Kraftfahrzeug in den Stillstand mit einer Stillstandsposition (Pv) vor der Parklücke (2) zu bringen, insbesondere vor der Parklücke (2) auf Höhe eines die Parklücke (2) begrenzenden Kraftfahrzeugs.

3. System nach einem der vorhergehenden Ansprüche, wobei das System eingerichtet ist, falls ein Folgefahrzeug (3) vorhanden ist,
- vor dem Vorbeifahren an der Parklücke (2) zu prüfen, ob das Folgefahrzeug (3) in den Stillstand gekommen ist, und
- in Reaktion auf die Feststellung, dass das Folgefahrzeug (3) in den Stillstand gekommen ist, das Kraftfahrzeug anzufahren und das Kraftfahrzeug an der Parklücke (2) vorbeizufahren.

4. System nach einem der vorhergehenden Ansprüche, wobei das System eingerichtet ist,
- während des Annäherns an die Parklücke (2) einen räumlichen oder zeitlichen Abstand zwischen dem eigenen Fahrzeug und dem Folgefahrzeug (3) zu bestimmen,
- zu prüfen, ob der Abstand ein bestimmtes Abstandskriterium erfüllt, und
- in Reaktion hierauf, das Kraftfahrzeug in den Stillstand mit der derartigen Stillstandsposition zu bringen, in der sich das Kraftfahrzeug noch nicht hinter der Parklücke (2) befindet.

5. System nach einem der vorhergehenden Ansprüche, wobei das System eingerichtet ist, nach Erkennung der Parklücke (2) einen Fahrtrichtungsanzeiger selbsttätig auszulösen.

6. Verfahren zum automatisierten Fahren eines Kraftfahrzeugs in einem automatisierten Fahrbetrieb und zum automatisierten rückwärtigen Einparken in eine Parklücke (2) aus dem automatisierten Fahrbetrieb heraus, mit den Schritten:
- Steuern des Kraftahrzeugs in einem automatisierten Fahrbetrieb mit zumindest automatisierter Längsführung;
- während des automatisierten Fahrbetriebs,
• Erkennen einer Parklücke (2), und
• Prüfen, ob ein Folgefahrzeug (3) hinter dem Kraftfahrzeug (1) vorhanden ist;
- falls ein Folgefahrzeug (3) vorhanden ist,
• Bringen des Kraftfahrzeugs in den Stillstand mit einer derartigen Stillstandsposition (Pv), in der sich das Kraftfahrzeug (1) noch nicht hinter der Parklücke (2) befindet,
• danach automatisiertes Vorbeifahren des Kraftfahrzeugs an der Parklücke (2), Bringen des Kraftfahrzeugs (1) in den Stillstand mit einer Stillstandsposition (P_{N}), in der sich das Kraftfahrzeug hinter der Parklücke (2) befindet, und dann automatisiertes Einparken des Kraftfahrzeugs rückwärts in die Parklücke (2);
- falls kein Folgefahrzeug (3) vorhanden ist, automatisiertes Vorbeifahren des Kraftfahrzeugs (1) an der Parklücke (2), Bringen des Kraftfahrzeugs (1) in den Stillstand mit einer Stillstandsposition (Pv), in der sich das Kraftfahrzeug (1) hinter der Parklücke (2) befindet, und dann automatisiertes Einparken des Kraftfahrzeugs (1) rückwärts in die Parklücke (2).

7. Software mit Programmcode zur Durchführung des Verfahrens nach Anspruch 6, wenn die Software auf einer oder mehreren softwaregesteuerten Einrichtungen abläuft.

## Claims

1. System for automated driving of a motor vehicle (1) in an automated driving mode and for automated reverse parking in a parking space (3) from the automated driving mode, wherein the system is set up
- to control the motor vehicle (1) in an automated driving mode with at least automated longitudinal guidance,
- during the automated driving mode,
t o detect a parking space (2), and
t o check whether a following vehicle (3) is present behind the motor vehicle,
- if a following vehicle (3) is present,
t o bring the motor vehicle (1) to a standstill with a kind of standstill position (PV) in which the motor vehicle (1) is not yet beyond the parking space (2),
t o subsequently drive the motor vehicle past the parking space (2) in automated fashion, to bring the motor vehicle to a standstill with a standstill position (PN) in which the motor vehicle is beyond the parking space (2), and to then park the motor vehicle in the parking space (2) in reverse in automated fashion,
- if a following vehicle (3) is not present, to drive the motor vehicle past the parking space (2) in automated fashion, to bring the motor vehicle to a standstill with a standstill position (PN) in which the motor vehicle is beyond the parking space (2), and to then park the motor vehicle in the parking space (2) in reverse in automated fashion.

2. System according to Claim 1, wherein the system is set up so as, if a following vehicle (3) is present, to bring the motor vehicle to a standstill with a standstill position (PV) before the parking space (2), in particular before the parking space (2) at the level of a motor vehicle bounding the parking space (2).

3. System according to either of the preceding claims, wherein the system is set up so as, if a following vehicle (3) is present,
- to check, prior to driving past the parking space (2), whether the following vehicle (3) has come to a standstill, and
- to react to the discovery that the following vehicle (3) has come to a standstill by moving off the motor vehicle and driving the motor vehicle past the parking space (2).

4. System according to one of the preceding claims, wherein the system is set up so as,
- while approaching the parking space (2), to determine a physical or temporal distance between the ego vehicle and the following vehicle (3),
- to check whether the distance satisfies a specific distance criterion, and
- to react thereto by bringing the motor vehicle to a standstill with the kind of standstill position in which the motor vehicle is not yet beyond the parking space (2) .

5. System according to one of the preceding claims, wherein the system is set up to automatically trigger a direction of travel indicator following detection of the parking space (2).

6. Method for automated driving of a motor vehicle in an automated driving mode and for automated reverse parking in a parking space (2) from the automated driving mode, having the steps of:
- controlling the motor vehicle in an automated driving mode with at least automated longitudinal guidance;
- during the automated driving mode,
• detecting a parking space (2), and
• checking whether a following vehicle (3) is present behind the motor vehicle (1);
- if a following vehicle (3) is present,
• bringing the motor vehicle (1) to a standstill with a kind of standstill position (PV) in which the motor vehicle (1) is not yet beyond the parking space (2),
• subsequently driving the motor vehicle past the parking space (2) in automated fashion, bringing the motor vehicle (1) to a standstill with a standstill position (PN) in which the motor vehicle is beyond the parking space (2), and then parking the motor vehicle in the parking space (2) in reverse in automated fashion;
- if a following vehicle (3) is not present, driving the motor vehicle (1) past the parking space (2) in automated fashion, bringing the motor vehicle (1) to a standstill with a standstill position (PV) in which the motor vehicle (1) is beyond the parking space (2), and then parking the motor vehicle (1) in the parking space (2) in reverse in automated fashion.

7. Piece of software with program code for carrying out the method according to Claim 6 when the software runs on one or more software-controlled devices.

## Revendications

1. Système de conduite automatique d'un véhicule automobile (1) en mode de conduite automatique et de stationnement en marche arrière automatique dans une place de stationnement (3) à partir du mode de conduite automatique, le système étant conçu pour
- commander le véhicule automobile (1) dans un mode de conduite automatique comprenant au moins un guidage longitudinal automatique,
- pendant le mode de conduite automatique,
• détecter une place de stationnement (2), et
• vérifier s'il y a un véhicule suiveur (3) derrière le véhicule automobile,
- s'il y a un véhicule suiveur (3),
• amener le véhicule automobile (1) à l'arrêt avec une position d'arrêt (Pv) dans laquelle le véhicule automobile (1) ne se trouve pas encore derrière la place de stationnement (2),
• puis faire passer le véhicule automobile de manière automatique devant la place de stationnement (2) et amener le véhicule automobile à l'arrêt à une position d'arrêt (P_{N}) dans laquelle le véhicule automobile se trouve derrière la place de stationnement (2), puis stationner automatiquement le véhicule automobile en marche arrière jusque dans la place de stationnement (2),
- s'il n'y a pas de véhicule suiveur (3), faire passer automatiquement le véhicule automobile devant la place de stationnement (2) et amener le véhicule automobile à l'arrêt à une position d'arrêt (P_{N}) dans laquelle le véhicule automobile se trouve derrière la place de stationnement (2), puis stationner le véhicule automobile automatiquement en marche arrière jusque dans la place de stationnement (2).

2. Système selon la revendication 1, le système étant conçu, s'il y a un véhicule suiveur (3), pour amener le véhicule automobile à l'arrêt dans une position d'arrêt (P_{V}) devant la place de stationnement (2), notamment devant la place de stationnement (2) au niveau d'un véhicule automobile limitant la place de stationnement (2) .

3. Système selon l'une des revendications précédentes, le système étant conçu, s'il y a un véhicule suiveur (3),
- pour vérifier, avant de dépasser la place de stationnement (2), si le véhicule suiveur (3) est à l'arrêt, et
- démarrer, en réponse à la détermination que le véhicule suiveur (3) est à l'arrêt, le véhicule automobile et faire passer le véhicule automobile devant la place de stationnement (2).

4. Système selon l'une des revendications précédentes, le système étant conçu pour
- déterminer une distance spatiale ou temporelle entre son propre véhicule et le véhicule suiveur (3) à l'approche de la place de stationnement (2),
- vérifier si la distance satisfait à un critère de distance déterminé, et
- amener en réponse le véhicule automobile à l'arrêt dans une position d'arrêt dans laquelle le véhicule automobile ne se trouve pas encore derrière la place de stationnement (2).

5. Système selon l'une des revendications précédentes, le système étant conçu pour déclencher automatiquement un indicateur de direction de conduite après détection de la place de stationnement (2).

6. Procédé de conduite automatique d'un véhicule automobile en mode de conduite automatique et pour le stationner automatiquement en marche arrière jusque dans une place de stationnement (2) à partir du mode de conduite automatique, ledit procédé comprenant les étapes suivantes :
- commander le véhicule automobile dans un mode de conduite automatique comprenant au moins un guidage longitudinal automatique,
- pendant le mode de conduite automatique,
• détecter une place de stationnement (2), et
• vérifier s'il y a un véhicule suiveur (3) derrière le véhicule automobile (1),
- s'il y a un véhicule suiveur (3),
• amener le véhicule automobile (1) à l'arrêt à une position d'arrêt (Pv) dans laquelle le véhicule automobile (1) ne se trouve pas encore derrière la place de stationnement (2),
• puis faire passer le véhicule automobile de manière automatique devant la place de stationnement (2) et amener le véhicule automobile (1) à l'arrêt à une position d'arrêt (P_{N}) dans laquelle le véhicule automobile se trouve derrière la place de stationnement (2), puis stationner automatiquement le véhicule automobile en marche arrière jusque dans la place de stationnement (2),
- s'il n'y a pas de véhicule suiveur (3), faire passer automatiquement le véhicule automobile (1) devant la place de stationnement (2) et amener le véhicule automobile (1) à l'arrêt à une position d'arrêt (Pv) dans laquelle le véhicule automobile (1) se trouve derrière la place de stationnement (2), puis stationner le véhicule automobile (1) automatiquement en marche arrière jusque dans la place de stationnement (2).

7. Logiciel comprenant du code de programme destiné à mettre en œuvre le procédé selon la revendication 6, lorsque le logiciel est exécuté sur un ou plusieurs dispositifs commandés par logiciel.
